(19) Europäisches Patentamt
European Patent Office
Office européen des brevets

(11) **EP 3 979 204 A1**

(12) **EUROPEAN PATENT APPLICATION**
published in accordance with Art. 153(4) EPC

(43) Date of publication:
**06.04.2022 Bulletin 2022/14**

(21) Application number: **21781900.2**

(22) Date of filing: **23.03.2021**

(51) Int Cl.:
**G06T 7/579** (2017.01)

(86) International application number:
**PCT/CN2021/082407**

(87) International publication number:
**WO 2021/197143 (07.10.2021 Gazette 2021/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2020 CN 202010243906**

(71) Applicant: **Beijing Sensetime Technology Development Co., Ltd.**
**Haidian Beijing 100080 (CN)**

(72) Inventors:
• **WU, Wenyan**
**Beijing 100080 (CN)**
• **ZHU, Wentao**
**Beijing 100080 (CN)**
• **YANG, Zhuoqian**
**Beijing 100080 (CN)**

(74) Representative: **Bandpay & Greuter**
**30, rue Notre-Dame des Victoires**
**75002 Paris (FR)**

(54) **MOTION TRANSFER METHOD AND APPARATUS, AND DEVICE AND STORAGE MEDIUM**

(57)    A method, apparatus, device and storage medium for action transfer are provided by the present disclosure. Where, a first initial video involving an action sequence of an initial object is firstly obtained; then, a two-dimensional skeleton keypoint sequence of the initial object is identified from several frames of image in the first initial video; the two-dimensional skeleton keypoint sequence is converted into a three-dimensional skeleton keypoint sequence of a target object; finally, and a target video involving an action sequence of the target object is generated based on the three-dimensional skeleton keypoint sequence.

FIG.1

**Description**

**TECHNICAL FIELD**

The present disclosure relates to the field of computer vision technologies, and in particular to methods, apparatuses, devices and storage media for action transfer.

**BACKGROUND**

Action transfer is to transfer an action of an initial object involved in an initial motion video to a target object to form a target motion video. Because the initial motion video and the target motion video greatly differ in structure and view angle, it is very difficult to realize action transfer at the level of pixel. Especially when the initial object makes an extreme action or the initial object and the target object greatly differ in structure, an accuracy of transferring an action to the target object is relatively low.

**SUMMARY**

In view of this, the present disclosure at least provides an action transfer method and an action transfer apparatus.
According to a first aspect of embodiments of the present disclosure, provided is an action transfer method. The method includes: obtaining a first initial video involving an action sequence of an initial object; identifying a two-dimensional skeleton keypoint sequence of the initial object from several frames of image in the first initial video; converting the two-dimensional skeleton keypoint sequence into a three-dimensional skeleton keypoint sequence of a target object; generating a target video involving an action sequence of the target object based on the three-dimensional skeleton keypoint sequence.
In this aspect, by extracting the two-dimensional skeleton keypoint sequence, retargeting the two-dimensional skeleton keypoint sequence to the three-dimensional skeleton keypoint sequence, and performing action rendering for the target object based on the three-dimensional skeleton keypoint sequence, action transfer is achieved without realizing action transfer directly at the level of pixel. In this way, the problem that the initial video and the target video greatly differ in structure and view angle (especially, when the initial object makes an extreme action, or the initial object and the target object greatly differ in structure) is mitigated, and the accuracy of the action transfer can be improved. Moreover, in this aspect, by retargeting the three-dimensional skeleton keypoint sequence from the two-dimensional skeleton keypoint sequence, the use of three-dimensional keypoint estimation and retargeting with a large error in an action transfer is avoided, and thus helping improve the accuracy of the action transfer.
In a possible implementation, converting the two-dimensional skeleton keypoint sequence into the three-dimensional skeleton keypoint sequence of the target object includes: determining an action transfer component sequence of the initial object based on the two-dimensional skeleton keypoint sequence; determining the three-dimensional skeleton keypoint sequence of the target object based on the action transfer component sequence of the initial obj ect.
In this implementation, the three-dimensional skeleton keypoint sequence is retargeted by using the action transfer component sequence orthogonally decomposed based on the two-dimensional skeleton keypoint sequence. This way, the use of the three-dimensional keypoint estimation and retargeting with a large error in an action transfer is avoided, thus helping to improve the accuracy of the action transfer.
In a possible implementation, before determining the three-dimensional skeleton keypoint sequence of the target object, the action transfer method further includes: obtaining a second initial video involving the target object; identifying a two-dimensional skeleton keypoint sequence of the target object from several frames of image in the second initial video, determining the three-dimensional skeleton keypoint sequence of the target object based on the action transfer component sequence of the initial object includes: determining an action transfer component sequence of the target object based on the two-dimensional skeleton keypoint sequence of the target object; determining a target action transfer component sequence based on the action transfer component sequence of the initial object and the action transfer component sequence of the target object; determining the three-dimensional skeleton keypoint sequence of the target object based on the target action transfer component sequence.
In this implementation, the three-dimensional skeleton keypoint sequence is determined by fusing the action transfer component sequence orthogonally decomposed based on the two-dimensional skeleton keypoint sequence of the initial object and the action transfer component sequence orthogonally decomposed based on the two-dimensional skeleton keypoint sequence of the target object. In this case, when the initial object makes an extreme action or the initial object and the target object greatly differ in structure, the low accuracy of the action transfer can be overcome.
In a possible implementation, the action transfer component sequence of the initial object includes a motion component sequence, an object structure component sequence, and a photographing angle component sequence, determining the action transfer component sequence of the initial object based on the two-dimensional skeleton keypoint sequence includes: for each of the several frames of image in the first initial video, determining motion component information, object structure component information and photographing angle component information corresponding to the frame of image based on a two-dimensional skeleton keypoint corresponding to the frame of image; determining the motion component sequence based on the motion component information corresponding to each of the several frames of image in the first initial video; determining the object structure component sequence based on the object structure component information corresponding to each of the several frames of image in the first initial video; determining the photographing angle component sequence based on the photographing angle component information corresponding to each of the several frames of image in the first initial video.

In this implementation, the action transfer component sequence may include a plurality of orthogonal component sequences. The three-dimensional skeleton keypoint sequence is determined by using of the plurality of orthogonal component sequences, such that the low accuracy of the action transfer can be further overcome when the initial object makes an extreme action or the initial object and the target object greatly differ in structure.

In a possible implementation, generating the target video involving the action sequence of the target object based on the three-dimensional skeleton keypoint sequence includes: generating a two-dimensional target skeleton keypoint sequence of the target object based on the three-dimensional skeleton keypoint sequence; generating the target video involving the action sequence of the target object based on the two-dimensional target skeleton keypoint sequence.

In this implementation, the two-dimensional target skeleton keypoint sequence is obtained by performing re-projection on the reconstructed three-dimensional skeleton keypoint sequence. In this way, the use of three-dimensional keypoint estimation and retargeting with a large error in an action transfer is avoided, which helps to improve the accuracy of the action transfer.

In a possible implementation, converting the two-dimensional skeleton keypoint sequence into the three-dimensional skeleton keypoint sequence of the target object includes: converting the two-dimensional skeleton keypoint sequence into the three-dimensional skeleton keypoint sequence of the target object by using an action transfer neural network.

In this implementation, determining the three-dimensional skeleton keypoint sequence of the target object by using a trained action transfer neural network can improve the efficiency and the accuracy of keypoint retargeting.

In a possible implementation, the above action transfer method further includes steps of training the action transfer neural network: obtaining a sample motion video involving an action sequence of a sample object; identifying a first sample two-dimensional skeleton keypoint sequence of the sample object from several frames of sample image in the sample motion video; obtaining a second sample two-dimensional skeleton keypoint sequence by performing limb scaling for the first sample two-dimensional skeleton keypoint sequence; determining a loss function based on the first sample two-dimensional skeleton keypoint sequence and the second sample two-dimensional skeleton keypoint sequence; adjusting a network parameter of the action transfer neural network based on the loss function.

In this implementation, the action transfer neural network is trained by using the loss function constructed by using the first sample two-dimensional skeleton keypoint sequence of the sample object and the second sample two-dimensional skeleton keypoint sequence obtained by performing limb scaling for the sample object. In this case, when the initial object and the target object differ greatly in structure, the accuracy of the action transfer can be improved. Furthermore, when the above action transfer neural network is trained, paired action-role data in the real world is not used. Thus, unsupervised construction of the loss function and unsupervised training of the action transfer neural network are achieved, which helps to improve the accuracy of the trained action transfer neural network in performing action transfer.

In a possible implementation, determining the loss function based on the first sample two-dimensional skeleton keypoint sequence and the second sample two-dimensional skeleton keypoint sequence includes: determining a first sample action transfer component sequence based on the first sample two-dimensional skeleton keypoint sequence; determining a second sample action transfer component sequence based on the second sample two-dimensional skeleton keypoint sequence; determining an estimated three-dimensional skeleton keypoint sequence based on the first sample action transfer component sequence; determining the loss function based on the first sample action transfer component sequence, the second sample action transfer component sequence, and the estimated three-dimensional skeleton keypoint sequence.

In this implementation, the loss function is constructed by using the first sample action transfer component sequence orthogonally decomposed based on the first sample two-dimensional skeleton keypoint sequence, the second sample action transfer component sequence orthogonally decomposed based on the second sample two-dimensional skeleton keypoint sequence, and the estimated three-dimensional skeleton keypoint sequence reconstructed based on the first sample action transfer component sequence. In this way, when the initial object and the target object greatly differ in structure, the accuracy of the action transfer can be improved.

In a possible implementation, the loss function includes a motion invariant loss function, the first sample action transfer component sequence includes first sample motion component information, first sample structure component information and first sample angle component information corresponding to each frame of sample image, the second sample action transfer component sequence includes second sample motion component information, second sample structure component information and second sample angle component information corresponding to each frame of sample image.

Determining the loss function includes: based on the second sample motion component information, the first sample structure component information, and the first sample angle component information corresponding to each frame of sample image, determining first estimated skeleton keypoints corresponding to respective first sample two-dimensional skeleton keypoints in the first sample two-dimensional skeleton keypoint sequence; based on the first sample motion component information, the second sample structure component information, and the second sample angle component information corresponding to each frame of sample image, determining a second estimated skeleton keypoints corresponding to respective second sample two-dimensional skeleton keypoints in the second sample two-dimensional skeleton keypoint sequence; based on the first estimated skeleton keypoints, the second estimated skeleton keypoints, the first sample motion component information, the second sample motion component information, and the estimated three-dimensional skeleton keypoint sequence, determining the motion invariant loss function.

In this implementation, based on the information obtained by orthogonally decomposing the first sample two-dimensional skeleton keypoint sequence and the second sample two-dimensional skeleton keypoint sequence, the first estimated skeleton keypoint is obtained by performing skeleton recovery for the sample object, and the second estimated skeleton keypoint is obtained by performing skeleton recovery for the sample object subjected to limb scaling; Next, the motion invariant loss function is constructed in combination with the recovered first estimated skeleton keypoint, the recovered second estimated skeleton keypoint and the reconstructed estimated three-dimensional skeleton keypoint sequence of the sample object. Although the sample object is subjected to change or perturbation in structure and view angle, motion information after transfer should be unchanged. Therefore, by constructing the motion invariant loss function and minimizing the motion invariant loss function during training, the accuracy of the constructed action transfer neural network in performing action transfer can be improved.

In a possible implementation, the loss function further includes a structure invariant loss function; determining the loss function further includes: screening out first sample two-dimensional skeleton keypoints in sample images corresponding to a first moment and a second moment from the first sample two-dimensional skeleton keypoint sequence; screening out second sample two-dimensional skeleton keypoints in the sample images corresponding to the second moment and the first moment from the second sample two-dimensional skeleton keypoint sequence; based on the first sample two-dimensional skeleton keypoints in the sample images corresponding to the first moment and the second moment, the second sample two-dimensional skeleton keypoint in the sample images corresponding to the second moment and the first moment, and the estimated three-dimensional skeleton keypoint sequence, determining the structure invariant loss function.

In this implementation, the structure invariant loss function can be constructed by using the first sample two-dimensional skeleton keypoints and the second sample two-dimensional skeleton keypoints at different moments in combination with the reconstructed estimated three-dimensional skeleton keypoint sequence of the sample object. Because the structure of the sample object is unchanged over time, by constructing the structure invariant loss function and minimizing the motion invariant loss function and the structure invariant loss function during training, the accuracy of the constructed action transfer neural network in performing action transfer can be improved.

In a possible implementation, the loss function further includes a view-angle invariant loss function, determining the loss function further includes: based on the first sample two-dimensional skeleton keypoints in the sample images corresponding to the first moment and the second moment, the first sample angle component information of the sample images corresponding to the first moment and the second moment, the second sample angle component information of the sample images corresponding to the first moment and the second moment and the estimated three-dimensional skeleton keypoint sequence, determining the view-angle invariant loss function.

In this implementation, the view-angle invariant loss function can be constructed by using the first sample two-dimensional skeleton keypoints at different moments and the reconstructed estimated three-dimensional skeleton keypoint sequence of the sample object and the like. Because the photographing view-angle of the sample object is unchanged along with change of motion and structure of the sample object, by constructing the view-angle invariant loss function and minimizing the view-angle invariant loss function, the motion invariant loss function and the structure invariant loss function during training, the accuracy of the constructed action transfer neural network in performing action transfer can be improved.

In a possible implementation, the loss function further includes a reconstruction recovery loss function, determining the loss function further includes: determining the reconstruction recovery loss function based on the first sample two-dimensional skeleton keypoint sequence and the estimated three-dimensional skeleton keypoint sequence.

In this implementation, the reconstruction recovery loss function can be constructed by using the the first sample two-dimensional skeleton keypoint sequence and the reconstructed estimated three-dimensional skeleton keypoint sequence of the sample object. Because the sample object may remain unchanged when performing sample object recovery, by constructing the reconstruction recovery loss function, and minimizing the reconstruction recovery loss function, the view-angle invariant loss function, the motion invariant loss function and the structure invariant loss function during training, the accuracy of the constructed action transfer neural network in performing action transfer can be improved.

According to a second aspect of embodiments of the present disclosure, provided is an action transfer apparatus. The action transfer apparatus includes a video obtaining module, configured to obtain a first initial video involving an action sequence of an initial object; a keypoint extracting module, configured to identify a two-dimensional skeleton keypoint sequence of the initial object from several frames of image in the first initial video; a keypoint converting module, configured to convert the two-dimensional skeleton keypoint sequence into a three-dimensional skeleton keypoint sequence of a target object; an image rendering module, configured to generate a target video involving an action sequence of the target object based on the three-dimensional skeleton keypoint sequence.

In a possible implementation, for converting the two-dimensional skeleton keypoint sequence into the three-dimensional skeleton keypoint sequence of the target object, the keypoint converting module is configured to: determine an action transfer component sequence of the initial object based on the two-dimensional skeleton keypoint sequence; determine the three-dimensional skeleton keypoint sequence of the target object based on the action transfer component sequence of the initial object.

In a possible implementation, the video obtaining module is further configured to obtain a second initial video involving the target object; the keypoint extracting module is further configured to identify a two-dimensional skeleton keypoint sequence of the target object from several frames of image in the second initial video, for determining the three-dimensional skeleton keypoint sequence of the target object based on the action transfer component sequence of the initial object, the keypoint converting module is configured to: determine an action transfer component sequence of the target object based on the two-dimensional skeleton keypoint sequence of the target object; determine a target action transfer component sequence based on the action transfer component sequence of the initial object and the action transfer component sequence of the target object; determine the three-dimensional skeleton keypoint sequence of the target object based on the target action transfer component sequence.

In a possible implementation, the action transfer component sequence of the initial object includes a motion component sequence, an object structure component sequence, and a photographing angle component sequence, for determining the action transfer component sequence of the initial object based on the two-dimensional skeleton keypoint sequence, the keypoint converting module is configured to: for each of the several frames of image in the first initial video, determine motion component information, object structure component information, and photographing angle component information of the initial object based on a two-dimensional skeleton keypoint corresponding to the frame of image; determine the motion component sequence based on the motion component information corresponding to each of the several frames of image in the first initial video; determine the object structure component sequence based on the object structure component information corresponding to each of the several frames of image in the first initial video; determine the photographing angle component sequence based on the photographing angle component information corresponding to each of the several frames of image in the first initial video.

According to a third aspect of embodiments of the present disclosure, provided is an electronic device, including a processor, a memory and a bus. The memory stores machine readable instructions executable by the processor. When the electronic device runs, the processor and the memory communicate with each other via the bus. The machine readable instructions are executed by the processor to implement the steps of the action transfer method as described above.

According to a third aspect of embodiments of the present disclosure, provided is a computer readable storage medium storing computer programs. The computer programs are executed by a computer to implement the steps of the action transfer method as described above.

The above apparatus, electronic device and computer readable storage medium of the present disclosure at least contain technical features essentially identical or similar to the technical features of any one aspect or any one embodiment of any one aspect of the above method of the present disclosure. Therefore, the descriptions about the effects of the above apparatus, electronic device and computer readable storage medium can be referred to the effect descriptions of the above method and thus will not be repeated herein.

**BRIEF DESCRIPTION OF THE DRAWINGS**

In order to make the technical solutions of the embodiments of the present disclosure clearer, the accompanying drawing involved in the descriptions of the embodiments will be briefly introduced below. It should be understood that the following drawings only show some embodiments of the present disclosure and thus shall not be taken as limitation to the scope of protection of the present disclosure. Those skilled in the art may obtain other relevant drawings based on these drawings without paying creative work.

FIG. 1 is a flowchart illustrating an action transfer method according to an embodiment of the present disclosure.

FIG. 2 is a flowchart illustrating another action transfer method according to an embodiment of the present disclosure.

FIG. 3 is a flowchart illustrating a method of training an action transfer neural network according to an embodiment of the present disclosure.

FIG. 4 is a flowchart of recovering a skeleton keypoint during another training process of an action transfer neural network according to an embodiment of the present disclosure.

FIG. 5 is a structural schematic diagram illustrating an action transfer apparatus according to an embodiment of the present disclosure.

FIG. 6 is a structural schematic diagram illustrating an electronic device according to an embodiment of the present disclosure.

## DETAILED DESCRIPTION OF THE EMBODIMENTS

In order to make the objects, technical solutions and advantages of the embodiments of the present disclosure clearer, the technical solutions of the embodiments of the present disclosure will be clearly and fully described in conjunction with the accompanying drawings in the embodiments of the present disclosure. It should be understood that the accompanying drawings in the present disclosure are merely used for the purpose of description and illustration rather than limiting the scope of protection of the present disclosure. In addition, it should be understood that the illustrative drawings are not drawn according to a scale of a real object. The flowcharts of the present disclosure illustrate operations of some embodiments in the present disclosure. It should be understood that the operations of the flowcharts may not be carried out in sequence and those steps without logic contextual relationship may be carried out in a reverse sequence or simultaneously. Furthermore, those skilled in the art may add one or more other operations to the flowcharts or remove one or more operations from the flowcharts under the guidance of the contents of the present disclosure.

In addition, the described embodiments are merely some of the embodiments of the present disclosure rather than all embodiments. Generally, the components of the embodiments of the present disclosure described in the accompanying drawings may be arranged and designed in different configurations. Furthermore, the following detailed descriptions of the embodiments of the present disclosure in the accompanying drawings are not intended to limit the claimed scope of the present disclosure but only represent some selected embodiments of the present disclosure. All other embodiments obtained by those skilled in the art based on these embodiments of the present disclosure without making creative work shall fall within the scope of protection of the present disclosure.

It is noted that the term "include" used in the embodiments of the present disclosure is used to indicate the presence of the features appearing after this term but not preclude other additional features.

The present disclosure provides an action transfer method and apparatus. Where, by extracting a two-dimensional skeleton keypoint sequence, retargeting the two-dimensional skeleton keypoint sequence to a three-dimensional skeleton keypoint sequence, and performing action rendering for a target object based on the three-dimensional skeleton keypoint sequence, action transfer is achieved without realizing action transfer directly at the level of pixel. In this way, the problem that an initial video and a target video greatly differ in structure and view angle (especially, when the initial object makes an extreme action, or the initial object and the target object greatly differ in structure) is mitigated, and the accuracy of the action transfer can be improved. Moreover, in the present disclosure, by retargeting the three-dimensional skeleton keypoint sequence from the two-dimensional skeleton keypoint sequence, the use of three-dimensional keypoint estimation and retargeting with a large error in an action transfer is avoided, and thus helping improve the accuracy of the action transfer.

A method, an apparatus, a device and a storage medium for action transfer in the present disclosure will be described below in combination with specific embodiments.

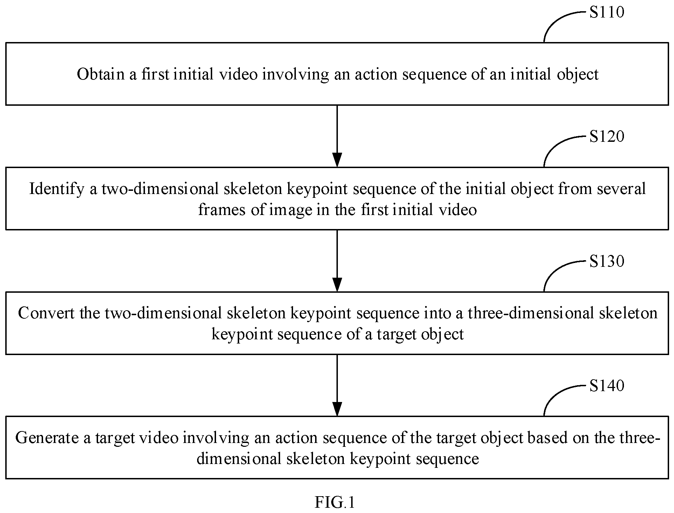

An embodiment of the present disclosure provides an action transfer method. The method is applied to a terminal device or server or the like which performs action transfer. Specifically, as shown in FIG. 1, the action transfer method provided by the embodiment of the present disclosure includes the following steps.

At step S110, a first initial video involving an action sequence of an initial object is obtained.

Herein, the first initial video includes several frames of image. The initial object may show a different posture in each frame of image, and all of these postures are combined to form the action sequence of the initial object.

At step S120, a two-dimensional skeleton keypoint sequence of the initial object is identified from several frames of image in the first initial video.

In order to determine the action sequence of the initial object, a two-dimensional skeleton keypoint of the initial object may be extracted from each frame of image in the first initial video. The two-dimensional skeleton keypoints corresponding to several frames of image respectively form the above two-dimensional skeleton keypoint sequence. Illustratively, the two-dimensional skeleton keypoint may include a keypoint corresponding to each joint of the initial object. The keypoints corresponding to various joints are combined together to form a skeleton of the initial object.

In a possible implementation, the two-dimensional skeleton keypoint of the initial object in each frame of image may be extracted by using a two-dimensional posture estimation neural network.

The above initial object may be a real human, a virtual human or animal or the like, which is not limited herein.

At step S130, the two-dimensional skeleton keypoint sequence is converted into a three-dimensional skeleton keypoint sequence of a target object.

In a possible implementation, an action transfer component sequence of the initial object may be firstly determined based on the two-dimensional skeleton keypoint sequence; and then, the three-dimensional skeleton keypoint sequence of the target object is determined based on the action transfer component sequence of the initial object.

Illustratively, the action transfer component sequence of the initial object includes at least one of a motion component sequence, an object structure component sequence or a photographing angle component sequence.

The motion component sequence represents a motion of the initial object, the object structure component sequence represents body shape of the initial object, and the photographing angle component sequence represents an angle of a camera.

In some embodiments, the motion component sequence, the object structure component sequence, and the photographing angle component sequence as described above may be formed in the following sub-steps.

At sub-step 1, motion component information, object structure component information, and photographing angle component information corresponding to each frame of image are respectively determined based on the two-dimensional skeleton keypoint corresponding to each of the several frames of image in the first initial video.

At sub-step 2, the motion component sequence is determined based on the motion component information corresponding to each of the several frames of image in the first initial video.

At sub-step 3, the object structure component sequence is determined based on the object structure component information corresponding to each of the several frames of image in the first initial video.

At sub-step 4, the photographing angle component sequence is determined based on the photographing angle component information corresponding to each of the several frames of image in the first initial video.

In the above steps, the motion component information, the object structure component information, and the photographing angle component information corresponding to each frame of image are respectively obtained by encoding the two-dimensional skeleton keypoint corresponding to each frame of image to semantically-orthogonal three vectors through a neural network. Afterwards, the motion component information corresponding to several frames of image is combined to form the motion component sequence, the object structure component information corresponding to several frames of image is combined to form the object structure component sequence, and the photographing angle component information corresponding to several frames of image is combined to form the photographing angle component sequence.

In the above three pieces of component information, each piece of component information is unchanged relative to the other two pieces of component information.

In these steps, the three-dimensional skeleton keypoint sequence is retargeted by using the action transfer component sequence orthogonally decomposed based on the two-dimensional skeleton keypoint sequence. In this way, the use of three-dimensional keypoint estimation and retargeting with a large error in an action transfer is avoided, which helps to improve the accuracy of the action transfer. Further, when the initial object makes an extreme action or the initial object and the target object differ greatly in structure, the low accuracy of the action transfer can be further overcome.

At step S140, a target video involving an action sequence of the target object is generated based on the three-dimensional skeleton keypoint sequence.

After the three-dimensional skeleton keypoint sequence is determined, a two-dimensional target skeleton keypoint of the target object may be obtained by projecting a three-dimensional skeleton keypoint corresponding to each frame of image in the three-dimensional skeleton keypoint sequence back to a two-dimensional space, and the two-dimensional target skeleton keypoints corresponding to several frames of image form a two-dimensional target skeleton keypoint sequence. Afterwards, the target video involving the action sequence of the target object is generated based on the two-dimensional target skeleton keypoint sequence. The action sequence of the target object corresponds to the action sequence of the initial object.

In some embodiments, for generating the target video which includes the action sequence of the target object based on the two-dimensional target skeleton keypoint sequence, action rendering may be performed with each group of obtained two-dimensional target skeleton keypoints to obtain a posture of the target object corresponding to each frame of image, and the action sequence of the target object can be obtained by combining the postures in various frames of image sequentially.

Illustratively, the target video involving the action sequence of the target object may be generated by using a video rendering engine, based on the two-dimensional target skeleton keypoint corresponding to each frame of image.

As above, the two-dimensional target skeleton keypoint sequence is obtained by performing re-projection on the reconstructed three-dimensional skeleton keypoint sequence. In this way, the use of three-dimensional keypoint estimation and retargeting with a large error in an action transfer is avoided, which helps to improve the accuracy of the action transfer.

Illustratively, in the above step S130, orthogonal decomposition may be performed for the two-dimensional skeleton keypoint sequence by using a trained motion transfer neural network, and the three-dimensional skeleton keypoint sequence of the target object is determined by using the action transfer component sequence obtained by orthogonal decomposition.

The above motion transfer neural network may include three encoders and one decoder. Each encoder is used to perform component information extraction for each two-dimensional skeleton keypoint in the two-dimensional skeleton keypoint sequence to obtain the above motion component information, object structure component information and photographing angle component information. After the above component information is obtained, decoding is performed by using one decoder, an estimated three-dimensional skeleton keypoint of the target object is obtained through reconstruction, and finally the estimated three-dimensional skeleton keypoint is re-projected back to a two-dimensional space to obtain one three-dimensional skeleton keypoint in the above three-dimensional skeleton keypoint sequence.

It should be noted that, for determining the three-dimensional skeleton keypoint, the object structure component information and photographing angle component information obtained by the encoder via direct decoding, or the object structure component information and the photographing angle component information obtained by average pooling can be used. Specifically, the two-dimensional skeleton keypoints respectively corresponding to several continuous frames of image including the current frame of image are orthogonally decomposed to obtain the object structure component information and the photographing angle component information corresponding to each frame of image. Then, average pooling operation is performed for the object structure component information corresponding to each frame of image to obtain the final object structure component information corresponding to the current frame of image; average pooling operation is performed for the photographing angle component information corresponding to each frame of image to obtain the final photographing angle component information corresponding to the current frame of image. Finally, based on the motion component information obtained by direct decomposition, the object structure component information obtained by average pooling operation and the photographing angle component information obtained by average pooling operation, the three-dimensional skeleton keypoint corresponding to the current frame of image is determined.

In this embodiment, direct action transfer at the level of pixel is avoided, which reduces the problem that the first initial video and the target video greatly differ in structure and view angle, and improves the accuracy of the action transfer especially when the initial object makes an extreme action or the initial object and the target object differ greatly in structure. Furthermore, in the above embodiment, the extracted two-dimensional skeleton keypoints are orthogonally decomposed to the motion component information, the object structure component information and the photographing angle component information, so as to further mitigate the low accuracy of the action transfer when the initial object makes an extreme action or the initial object and the target object differ greatly in structure.

In the embodiments of the present disclosure, in order to further mitigate the low accuracy of the action transfer when the initial object makes an extreme action or the initial object and the target object differ greatly in structure, before the three-dimensional skeleton keypoint sequence of the target object is determined, a second initial video involving the target object is obtained and a two-dimensional skeleton keyponit sequence of the target object is identified from several frames of image in the second initial video.

Afterwards, when the three-dimensional skeleton keypoint sequence of the target object is determined, an action transfer component sequence of the target object is firstly determined based on the two-dimensional skeleton keyponit sequence of the target object; then, a target action transfer component sequence is determined based on the action transfer component sequence of the initial object and the action transfer component sequence of the target object; finally, the three-dimensional skeleton keypoint sequence of the target object is determined based on the target action transfer component sequence.

The action transfer component sequence of the target object is determined in the same manner as the action transfer component sequence of the initial object is determined: firstly, a two-dimensional skeleton keypoint of the target object is respectively extracted from each frame of image in the second initial video, and the two-dimensional skeleton keypoint in each frame of image is orthogonally decomposed to determine the motion component information, the object structure component information and the photographing angle component information of the target object. Finally, the motion component information corresponding to several frames of image is used to form the motion component sequence, the object structure component information corresponding to several frames of image is used to form the object structure component sequence, and the photographing angle component information corresponding to several frames of image is used to form the photographing angle component sequence.

In the above embodiment, the three-dimensional skeleton keypoint sequence of the target object is reconstructed by using the fused target action transfer component sequence, and then the two-dimensional target skeleton keypoint sequence of the target object is obtained by performing re-projection for the reconstructed three-dimensional skeleton keypoint sequence. In this way, the use of three-dimensional keypiont estimation and retargeting with a large error in an action transfer is avoided, thereby helping to improve the accuracy of the action transfer.

The action transfer method of the present disclosure is described below with a specific embodiment.

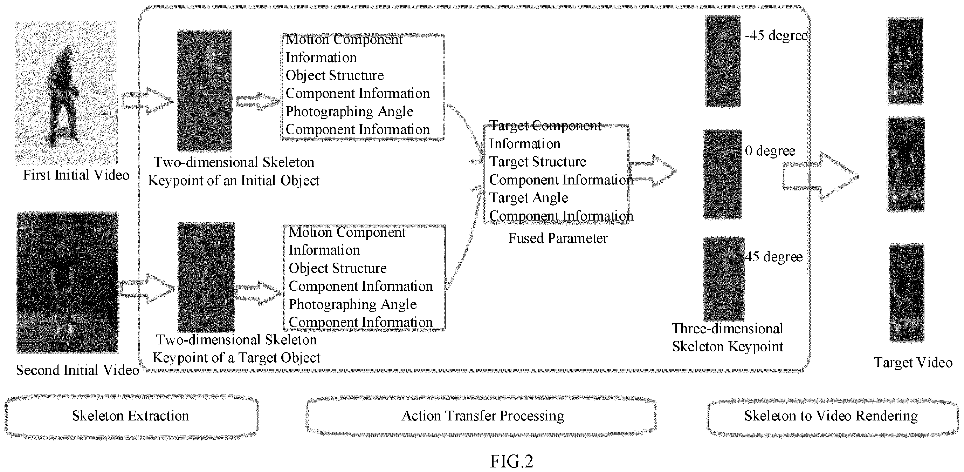

As shown in FIG. 2, the action transfer method of the present disclosure includes the following steps.

At step 1, skeleton extraction operation: a two-dimensional skeleton keypoint sequence of an initial object is obtained by extracting a two-dimensional skeleton keypoint of the initial object from each frame of image in a first initial video; a two-dimensional skeleton keypoint sequence of a target object is obtained by extracting a two-dimensional skeleton keypoint of the target object from each frame of image in a second initial video.

At step 2, action transfer operation: each two-dimensional skeleton keypoint in the two-dimensional skeleton keypoint sequence of the initial object and each two-dimensional skeleton keypoint in the two-dimensional skeleton keypoint sequence of the target object are subjected to encoding process respectively, that is, performing orthogonal decomposition, such that motion component information, object structure component information and photographing angle component information corresponding to each two-dimensional skeleton keypoint or each frame of image for the initial object, as well as motion component information, object structure component information and photographing angle component information corresponding to each two-dimensional skeleton keypoint or each frame of image for the target object may be obtained.

The motion component information corresponding to several frames of image for the initial object forms the motion component sequence of the initial object, the object structure component information corresponding to several frames of image for the initial object forms the object structure component sequence of the initial object, and the photographing angle component information corresponding to several frames of image for the initial object forms the photographing angle component sequence of the initial object. The motion component sequence, the object structure component sequence and the photographing angle component sequence of the initial object form the action transfer component sequence of the initial object.

Likewise, The motion component information corresponding to several frames of image for the target object forms the motion component sequence of the target object, the object structure component information corresponding to several frames of image for the target object forms the object structure component sequence of the target object, and the photographing angle component information corresponding to several frames of image for the target object forms the photographing angle component sequence of the target object. The motion component sequence, the object structure component sequence and the photographing angle component sequence of the target object form the action transfer component sequence of the target object.

Afterwards, a target action transfer component sequence is determined based on the action transfer component sequence of the initial object and the action transfer component sequence of the target object; a three-dimensional skeleton keypoint sequence of the target object is determined based on the target action transfer component sequence.

Illustratively, recombined target motion component information, target structure component information and target angle component information may be obtained by recombining the motion component information, the object structure component information and the photographing angle component information corresponding to each frame of image for the initial object with the motion component information, the object structure component information and the photographing angle component information corresponding to each frame of image for the target object.

The target motion component information corresponding to several frames of image may form a target motion component sequence, the target structure component information corresponding to several frames of image may form a target object structure component sequence, and the target angle component information corresponding to several frames of image may form a target photographing angle component sequence. The target motion component sequence, the target object structure component sequence and the target photographing angle component sequence form the above target action transfer component sequence.

Next, three-dimensional skeleton keypoints corresponding to one frame of image for the target object at three preset angles may be obtained by performing decoding operation for the target motion component information, the target structure component information and the target angle component information. The three-dimensional skeleton keypoints of several frames of image form the above three-dimensional skeleton keypoint sequence.

Finally, a two-dimensional target skeleton keypoint of the target object at each preset angle may be obtained by re-projecting the three-dimensional skeleton keypoint at each preset angle back to a two-dimensional space.

At step 3, skeleton-video rendering operation: based on the two-dimensional target skeleton keypoint of the target object at each preset angle in each frame of image, a target action of the target object at each preset angle is determined and a target video of the target object at each preset angle is generated based on the target action.

In the above embodiment, the accuracy of the action transfer can be significantly improved, and the action transfer can be achieved at any angle. Moreover, when the target object and the initial object greatly differ in structure, or the initial object makes an extreme action, an accurate action transfer can be still achieved, thus obtaining good visual effect.

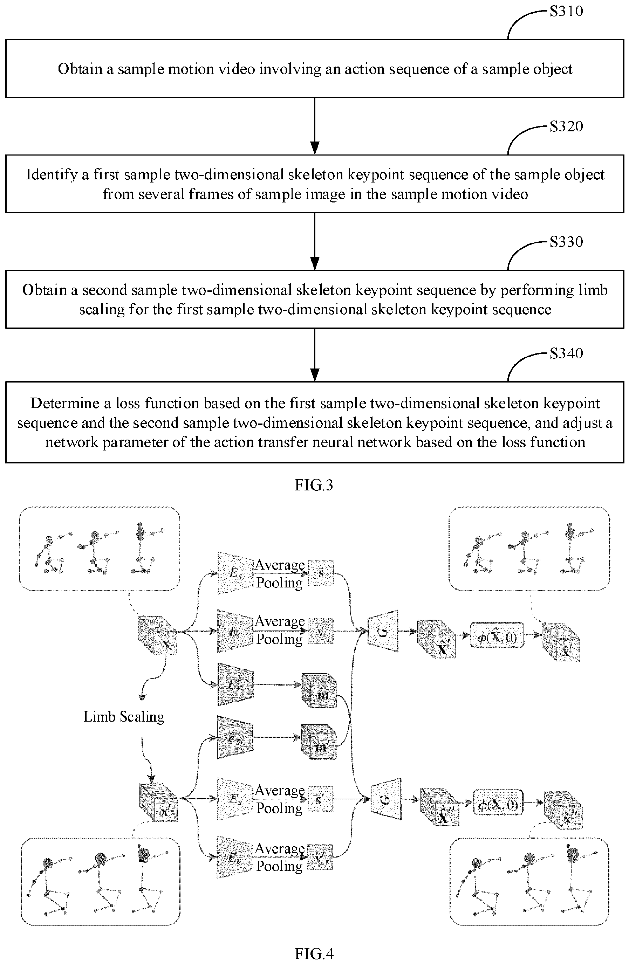

At present, because a motion presents complex nonlinearity and it is difficult to find paired action-role data in the real world, it is difficult to build an accurate action transfer model to achieve the above action transfer, resulting in low accuracy of the action transfer. In order to mitigate the above defect, the present disclosure further provides a method of training an action transfer neural network. The method may be applied to the above terminal device or server which performs action transfer and may also be applied to a terminal device or server which trains a neural network separately. Specifically, as shown in FIG. 3, the method includes the following steps.

At step S310, a sample motion video involving an action sequence of a sample object is obtained.

At step S320, a first sample two-dimensional skeleton keypoint sequence of the sample object is identified from several frames of sample image in the sample motion video.

Herein, a first sample two-dimensional skeleton keypoint of the sample object is extracted from each frame of image in the sample motion video. The first sample two-dimensional skeleton keypoints extracted from several frames of sample image form the first sample two-dimensional skeleton keypoint sequence.

The above first sample two-dimensional skeleton keypoint may include a keypoint corresponding to each joint of the sample object. The keypoints corresponding to various joints are combined to form a skeleton of the sample object.

In a specific implementation, the first sample two-dimensional skeleton keypoint of the sample object may be extracted by using a two-dimensional posture estimation neural network.

The above sample object may be a real human, or a virtual human or animal or the like, which is not limited herein.

At step S330, a second sample two-dimensional skeleton keypoint sequence is obtained by performing limb scaling for the first sample two-dimensional skeleton keypoint sequence.

Herein, the second sample two-dimensional skeleton keypoint sequence is obtained by performing scaling for each first sample two-dimensional skeleton keypoint in the first sample two-dimensional skeleton keypoint sequence based on a preset scaling factor.

As shown in FIG. 4, a second sample two-dimensional skeleton keypoint x' is obtained by performing limb scaling for a first sample two-dimensional skeleton keypoint x.

At step S340, a loss function is determined based on the first sample two-dimensional skeleton keypoint sequence and the second sample two-dimensional skeleton keypoint sequence. Based on the loss function, a network parameter of the action transfer neural network is adjusted.

In a specific implementation, each first sample two-dimensional skeleton keypoint in the first sample two-dimensional skeleton keypoint sequence and each second sample two-dimensional skeleton keypoint in the second sample two-dimensional skeleton keypoint sequence are orthogonally decomposed. Thus, estimation of a three-dimensional skeleton keypoint sequence and recovery of a two-dimensional sample skeleton keypiont are performed based on the information obtained by decomposition and then the loss function is constructed based on the information obtained by decomposition, the estimated three-dimensional skeleton keypoint sequence and the recovered two-dimensional sample skeleton keypoint.

Herein, minimizing the value of the constructed loss function is the goal of training the action transfer neural network.

In this embodiment, the action transfer neural network is trained by using the loss function constructed by using the first sample two-dimensional skeleton keypoint sequence of the sample object and the second sample two-dimensional skeleton keypoint sequence obtained by performing limb scaling for the sample object. In this case, when the initial object and the target object differ greatly in structure, the accuracy of the action transfer can be improved. Furthermore, when the above action transfer neural network is trained, paired action-role data in the real world is not used. Thus, unsupervised construction of the loss function and unsupervised training of the action transfer neural network are achieved, which helps to improve the accuracy of the trained action transfer neural network in performing action transfer.

The above action transfer neural network may include three encoders and one decoder. The training of the action transfer neural network is essentially a training of the three encoders and one decoder.

In some embodiments, the loss function may be determined based on the first sample two-dimensional skeleton keypoint sequence and the second sample two-dimensional skeleton keypoint sequence in the following steps.

At step 1, a first sample action transfer component sequence is determined based on the first sample two-dimensional skeleton keypoint sequence.

First sample motion component information, first sample structure component information and first sample angle component information corresponding to each frame of sample image may be obtained by orthogonally decomposing each first sample two-dimensional skeleton keypoint in the first sample two-dimensional skeleton keypoint sequence. The first sample motion component information corresponding to several frames of sample image forms a first sample motion component sequence; the first sample structure component information corresponding to several frames of sample image forms a first sample structure component sequence; the first sample angle component information corresponding to several frames of sample image forms a first sample angle component sequence. The first sample motion component sequence, the first sample structure component sequence and the first sample angle component sequence form the above first sample action transfer component sequence.

Herein, as shown in FIG. 4, the first sample motion component information is obtained by processing a first sample two-dimensional skeleton keypoint x using an encoder Em in the action transfer neural network; the first sample structure component information is obtained by processing the first sample two-dimensional skeleton keypoint x using another encoder Es; the first sample angle component information is obtained by processing the first sample two-dimensional skeleton keypoint x using the last encoder Ev.

Final first sample structure component information $\bar{s}$ is obtained by perform average pooling for the first sample structure component information corresponding to a current frame of sample image and the first sample structure component information corresponding to several frames of sample image (for example, 64 frames) adj acent to the current frame of sample image.

Final first sample angle component information $\bar{v}$ is obtained by performing average pooling for the first sample angle component information corresponding to the current frame of sample image and the first sample angle component information corresponding to several frames of sample image adjacent to the current frame of sample image. The first sample motion component information corresponding to the current frame of sample image is not subjected to average pooling and can be directly used as final first sample motion component information m.

At step 2, a second sample action transfer component sequence is determined based on the second sample two-dimensional skeleton keypoint sequence.

Second sample motion component information, second sample structure component information and second sample angle component information corresponding to each frame of sample image may be obtained by orthogonally decomposing each second sample two-dimensional skeleton keypoint in the second sample two-dimensional skeleton keypoint sequence. The second sample motion component information corresponding to several frames of sample image forms a second sample motion component sequence; the second sample structure component information corresponding to several frames of sample image forms a second sample structure component sequence; the second sample angle component information corresponding to several frames of sample image forms a second sample angle component sequence. The second sample motion component sequence, the second sample structure component sequence and the second sample angle component sequence form the above second sample action transfer component sequence.

Herein, as shown in FIG. 4, the second sample motion component information is obtained by processing a second sample two-dimensional skeleton keypoint x' using an encoder Em in the action transfer neural network; the second sample structure component information is obtained by processing the second sample two-dimensional skeleton keypoint x' using another encoder Es; the second sample angle component information is obtained by processing the second sample two-dimensional skeleton keypoint x' using the last encoder Ev.

Final second sample structure component information $\bar{s}$ is obtained by perform average pooling for the second sample structure component information corresponding to a current frame of sample image and the second sample structure component information corresponding to several frames of sample image adj acent to the current frame of sample image. Final second sample angle component information $\bar{v}$, is obtained by performing average pooling for the second sample angle component information corresponding to the current frame of sample image and the second sample angle component information corresponding to several frames of sample image adjacent to the current frame of sample image. The second sample motion component information corresponding to the current frame of sample image is not subjected to average pooling and can be directly used as final second sample motion component information m'.

At step 3, an estimated three-dimensional skeleton keypoint sequence is determined based on the first sample action transfer component sequence.

Herein, specifically, an estimated three-dimensional skeleton keypoint is determined based on the first sample motion component information, the first sample structure component information and the first sample angle component information corresponding to one frame of sample image. The estimated three-dimensional skeleton keypoints corresponding to several frames of sample image form the above estimated three-dimensional skeleton keypoint sequence.

Herein, specifically, a reconstructed estimated three-dimensional skeleton keypoint may be obtained by performing decoding for the first sample motion component information, the first sample structure component information and the first sample angle component information of one frame of sample image by using one decoder G.

At step 4, the loss function is determined based on the first sample action transfer component sequence, the second sample action transfer component sequence and the estimated three-dimensional keypoint sequence.

In a specific implementation, recovery of a two-dimensional sample skeleton keypoint is performed using the first sample motion component information, the first sample structure component information and the first sample angle component information in the first sample action transfer component sequence and the second sample motion component information, the second sample structure component information and the second sample angle component information in the second sample action transfer component sequence, and then the loss function is constructed by using the estimated three-dimensional skeleton keypoint sequence and the recovered two-dimensional sample skeleton keypoint.

In this implementation, the loss function is constructed by using the first sample action transfer component sequence orthogonally decomposed based on the first sample two-dimensional skeleton keypoint sequence, the second sample action transfer component sequence orthogonally decomposed based on the second sample two-dimensional skeleton keypoint sequence, and the estimated three-dimensional skeleton keypoint sequence reconstructed based on the first sample action transfer component sequence. In this way, when the initial object and the target object greatly differ in structure, the accuracy of the action transfer can be improved.

Although the sample object is subjected to change or perturbation in structure and view angle, motion information after transfer should be unchanged. Therefore, by constructing a motion invariant loss function and minimizing the motion invariant loss function during training to improve the accuracy of the constructed action transfer neural network in performing action transfer. Specifically, the above motion invariant loss function can be constructed in the following steps.

At step 1, a first estimated skeleton keypoint corresponding to the corresponding first sample two-dimensional skeleton keypoint in the first sample two-dimensional skeleton keypoint sequence is determined based on the second sample motion component information, the first sample structure component information and the first sample angle component information.

As shown in FIG. 4, the above can be achieved in the following sub-steps: reconstructing a three-dimensional skeleton keypiont $\hat{X}'$ by processing the second sample motion component information $m'$, the first sample structure component information $\bar{s}$ and the first sample angle component information $\bar{v}$ using the decoder G, and re-projecting the three-dimensional skeleton keypiont $\hat{X}'$ to a two-dimensional space using a rotational projection function $\Phi(\hat{X}', 0)$ to obtain the first estimated skeleton keypoint $\hat{x}'$.

At step 2, a second estimated skeleton keypoint corresponding to a corresponding second sample two-dimensional skeleton keypoint in the second sample two-dimensional skeleton keypoint sequence is determined based on the first sample motion component information, the second sample structure component information and the second sample angle component information.

As shown in FIG. 4, the above can be achieved in the following sub-steps: reconstructing a three-dimensional skeleton keypiont $\hat{X}''$ by processing the first sample motion component information $m$, the second sample structure component information $\bar{s}$, and the second sample angle component information $\bar{v}$, using the decoder G, and re-projecting the three-dimensional skeleton keypiont $\hat{x}''$ to a two-dimensional space using a rotational projection function $\Phi(\hat{X}'', 0)$ to obtain the second estimated skeleton keypoint $\hat{x}''$.

At steps 1 and 2, the first estimated skeleton keypoint $\hat{x}'$ and the second estimated skeleton keypoint $\hat{x}''$ are generated in the following formulas:

$$\hat{\mathbf{x}}' = \phi\left[G(E_m(\mathbf{x}'), \bar{E}_s(\mathbf{x}), \bar{E}_v(\mathbf{x})), 0\right]$$
$$\hat{\mathbf{x}}'' = \phi\left[G(E_m(\mathbf{x}), \bar{E}_s(\mathbf{x}'), \bar{E}_v(\mathbf{x}')), 0\right] \quad (1)$$

In the above formulas, Es represents performing average pooling operation for the sample structure component information extracted by the encoder, and $\bar{E}v$ represents performing average pooling operation for the sample angle component information extracted by the encoder.

At step 3, the motion invariant loss function is determined based on the first estimated skeleton keypoint, the second estimated skeleton keypoint, the first sample motion component information, the second sample motion component information and the estimated three-dimensional skeleton keypoint sequence.

The motion invariant loss functions constructed can include the following three functions:

$$\mathcal{L}_{\text{crs}} = \frac{1}{2NT}\left(\frac{1}{2}|\mathbf{x} - \hat{\mathbf{x}}'| + \frac{1}{2}|\mathbf{x}' - \hat{\mathbf{x}}''|\right) \quad (2)$$

$$\mathcal{L}_{\text{inv\_m}}^{(s)} = \frac{1}{MC_m}|E_m(\mathbf{x}) - E_m(\mathbf{x}')| \quad (3)$$

$$\mathcal{L}_{\text{inv\_m}}^{(v)} = \frac{1}{KMC_m}\sum_{k=1}^{K}\left|E_m(\mathbf{x}) - E_m(\hat{\mathbf{x}}^{(k)})\right| \quad (4)$$

$$\hat{\mathbf{x}}^{(k)} = \phi(\hat{\mathbf{X}}, \frac{k}{K+1}\pi), \ k = 1, 2, ..., K \quad (5)$$

In the above formulas, N represents a frame number of sample motion videos, T represents a number of joints corresponding to a first sample two-dimensional skeleton keypoint, M represents a preset value, Cm represents an encoding length of the first sample motion component information, K represents a number of rotations of a sample object, $\hat{X}$ represents an estimated three-dimensional skeleton keypoint, and $\mathcal{L}_{\text{crs}}$, $\mathcal{L}_{\text{inv\_m}}^{(s)}$, $\mathcal{L}_{\text{inv\_m}}^{(v)}$ represent three motion invariant loss functions.

In embodiments of the present disclosure, based on the information obtained by orthogonally decomposing the first sample two-dimensional skeleton keypoint sequence and the second sample two-dimensional skeleton keypoint sequence, the first estimated skeleton keypoint is obtained by performing skeleton recovery for the sample object and the second estimated skeleton keypoint is obtained by performing skeleton recovery for the sample object subjected to limb scaling. Next, the motion invariant loss function is constructed in combination with the recovered first estimated skeleton keypoint, the recovered second estimated skeleton keypoint and the reconstructed estimated three-dimensional skeleton keypoint sequence of the sample object.

Because the structure of the sample object is unchanged over time, Therefore, by constructing a structure invariant loss function and minimizing the motion invariant loss function and the structure invariant loss function during training to improve the accuracy of the constructed action transfer neural network in performing action transfer. Specifically, the above structure invariant loss function can be constructed in the following steps.

At step 1, the first sample two-dimensional skeleton keypoint of the sample object at the first moment and the first sample two-dimensional skeleton keypoint of the sample object at the second moment are screened out from the first sample two-dimensional skeleton keypoint sequence.

The second sample two-dimensional skeleton keypoint of the sample object at the second moment and the second sample two-dimensional skeleton keypoint of the sample object at the first moment are screened out from the second sample two-dimensional skeleton keypoint sequence.

The above first sample two-dimensional skeleton keypoints are two-dimensional skeleton keypoints of the sample object which are respectively extracted from the sample images corresponding to the first moment t1 and the second moment t2 in the sample motion video, where the two-dimensional skeleton keypoints are not subjected to limb scaling. The above second sample two-dimensional skeleton keypoints are keypoints obtained by performing limb scaling for the skeleton keypoints of the sample object respectively extracted from the sample images corresponding to the first moment t1 and the second moment t2 in the sample motion video.

At step 2, the structure invariant loss function is determined based on the first sample two-dimensional skeleton keypoint of the sample object at the first moment, the first sample two-dimensional skeleton keypoint of the sample object at the second moment, the second sample two-dimensional skeleton keypoint of the sample object at the second moment, the second sample two-dimensional skeleton keypoint of the sample object at the first moment and the estimated three-dimensional skeleton keypoint sequence.

In a specific implementation, the structure invariant loss functions constructed include the following two functions:

$$\mathcal{L}_{\text{trip\_s}} = \frac{1}{2M} \sum_{t_1, t_2} \left[ \tau(\mathbf{s}_{t_1}, \mathbf{s}_{t_2}, \mathbf{s}'_{t_2}) + \tau(\mathbf{s}'_{t_1}, \mathbf{s}'_{t_2}, \mathbf{s}_{t_2}) \right] \qquad (6)$$

$$\mathcal{L}_{\text{inv\_s}} = \frac{1}{KC_b} \sum_{i=1}^{K} \left| \bar{E}_s(\mathbf{x}) - \bar{E}_s(\hat{\mathbf{x}}^{(k)}) \right| \qquad (7)$$

$$\tau(\mathbf{s}_{t_1}, \mathbf{s}_{t_2}, \mathbf{s}'_{t_2}) = \max \left\{ 0, s(\mathbf{s}_{t_1}, \mathbf{s}'_{t_2}) - s(\mathbf{s}_{t_1}, \mathbf{s}_{t_2}) + m \right\} \qquad (8)$$

In the formulas, St1 represents sample structure component information directly extracted from the first sample two-dimensional skeleton keypoint at the moment t1, St2 represents sample structure component information directly extracted from the first sample two-dimensional skeleton keypoint at the moment t2, St2' represents sample structure component information directly extracted from the second sample two-dimensional skeleton keypoint at the moment t2, St1' represents sample structure component information directly extracted from the second sample two-dimensional skeleton keypoint at the moment t1, Cb represents an encoding length corresponding to the first sample structure component information, m is a preset value, s() represents a cosine similarity function, and $\mathcal{L}_{\text{trip\_s}}$ and $\mathcal{L}_{\text{inv\_s}}$ represent two structure invariant loss functions.

In an embodiment of the present disclosure, the structure invariant loss function can be constructed by using the first sample two-dimensional skeleton keypoints and the second sample two-dimensional skeleton keypoints at different moments in combination with the reconstructed estimated three-dimensional skeleton keypoint sequence of the sample object.

Because the photographing view-angle of the sample object is unchanged along with change of motion and structure of the sample object, by constructing a view-angle invariant loss function and minimizing the view-angle invariant loss function, the motion invariant loss function and the structure invariant loss function during training, the accuracy of the constructed action transfer neural network in performing action transfer can be improved. Specifically, the view-angle invariant loss function may be constructed in the following steps.

The view-angle invariant loss function is determined based on the first sample two-dimensional skeleton keypoint of the sample object at the first moment, the first sample two-dimensional skeleton keypoint of the sample object at the second moment, the first sample angle component information, the second sample angle component information, and the estimated three-dimensional skeleton keypoint sequence.

The view-angle invariant loss functions include the following two functions:

$$\mathcal{L}_{\text{trip}} = \frac{1}{2MK} \sum_{k,t_1,t_2} \left[ \tau(\mathbf{v}_{t_1}, \mathbf{v}_{t_2}, \mathbf{v}_{t_2}^{(k)}) + \tau(\mathbf{v}_{t_1}^{(k)}, \mathbf{v}_{t_2}^{(k)}, \mathbf{v}_{t_2}) \right] \tag{9}$$

$$\mathcal{L}_{\text{inv\_v}} = \frac{1}{C_v} \left| \bar{E}_v(\mathbf{x}) - \bar{E}_v(\mathbf{x}') \right| \tag{10}$$

$$\mathbf{v}^{(k)} = \bar{E}_v(\hat{\mathbf{x}}^{(k)}), t_1 \neq t_2 \tag{11}$$

In the formulas, vt1 represents the sample angle component information directly extracted from the first sample two-dimensional skeleton keypoint at the moment t1, vt2 represents the sample angle component information directly extracted from the first sample two-dimensional skeleton keypoint at the moment t2, Cv represents an encoding length corresponding to the first sample angle component information, and $\mathcal{L}_{\text{trip}}$ and $\mathcal{L}_{\text{inv\_v}}$ represents two view-angle invariant loss functions.

Because the sample object should remain unchanged when performing sample object recovery, by constructing a reconstruction recovery loss function and minimizing the reconstruction recovery loss function, the view-angle invariant loss function, the motion invariant loss function and the structure invariant loss function during training, the accuracy of the constructed action transfer neural network in performing action transfer can be improved. Specifically, the reconstruction recovery loss function may be constructed in the following steps.

The reconstruction recovery loss function is determined based on the first sample two-dimensional skeleton keypoint sequence and the estimated three-dimensional skeleton keypoint sequence.

The reconstruction recovery loss functions constructed include the following two functions:

$$\mathcal{L}_{\text{rec}} = \frac{1}{2NT} \left| \mathbf{x} - \phi(\hat{\mathbf{X}}, 0) \right| \tag{12}$$

$$\mathcal{L}_{\text{adv}} = \frac{1}{K} \sum_{k=1}^{K} \mathbb{E}_{\mathbf{x} \sim p_{\mathbf{x}}} \left[ \frac{1}{2} \log D(\mathbf{x}) + \frac{1}{2} \log(1 - D(\hat{\mathbf{x}}^{(k)})) \right] \tag{13}$$

In the formulas, D represents a convolutional network on a time sequence, $\mathbb{E}_{\mathbf{x} \sim p_{\mathbf{x}}}$ represents a probability distribution of x taken from a sample, then expectation is then solved for the subsequent function $\frac{1}{2} \log D(\mathbf{x}) + \frac{1}{2} \log(1 - D(\hat{\mathbf{x}}^{(k)}))$, and $\mathcal{L}_{\text{rec}}$ and $\mathcal{L}_{\text{adv}}$ represent two reconstruction recovery loss functions.

In the above embodiments, the reconstruction recovery loss function, the view-angle invariant loss function, the motion invariant loss function and the structure invariant loss function are constructed. In a specific implementation, a target loss function may be obtained by fusing the above loss functions in the following formula.

$$\mathcal{L} = \lambda_{\text{rec}} \mathcal{L}_{\text{rec}} + \lambda_{\text{crs}} \mathcal{L}_{\text{crs}} + \lambda_{\text{adv}} \mathcal{L}_{\text{adv}} + \lambda_{\text{trip}} (\mathcal{L}_{\text{trip\_s}} + \mathcal{L}_{\text{trip\_v}}) + \lambda_{\text{inv}} (\mathcal{L}_{\text{inv\_m}}^{(s)} + \mathcal{L}_{\text{inv\_m}}^{(v)} + \mathcal{L}_{\text{inv\_s}} + \mathcal{L}_{\text{inv\_v}}) \tag{14}$$

In the formula, λrec, λcrs, λadv, λtrip and λinv all represent preset weights.

The action transfer neural network is trained by minimizing the target loss function.

Corresponding to the above action transfer method, the present disclosure further provides an action transfer apparatus. The apparatus is applied to a terminal device or server performing action transfer, and various modules therein can implement steps identical to the steps of the above method and achieve the same beneficial effects. Therefore, for the same parts therein, no redundant descriptions will be made herein.

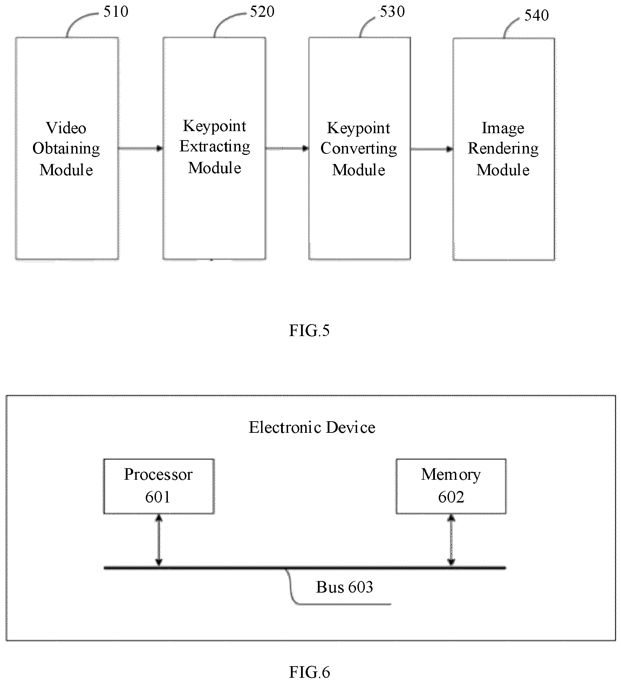

As shown in FIG. 5, the present disclosure provides an action transfer apparatus, including:

a video obtaining module 510, configured to obtain a first initial video involving an action sequence of an initial object;

a keypoint extracting module 520, configured to identify a two-dimensional skeleton keypoint sequence of the initial object from several frames of image in the first initial video;

a keypoint converting module 530, configured to convert the two-dimensional skeleton keypoint sequence into a three-dimensional skeleton keypoint sequence of a target object;

an image rendering module 540, configured to generate a target video involving an action sequence of the target object based on the three-dimensional skeleton keypoint sequence.

In some embodiments, when converting the two-dimensional skeleton keypoint sequence into the three-dimensional skeleton keypoint sequence of the target object, the keypoint converting module 530 is configured to: determine an action transfer component sequence of the initial object based on the two-dimensional skeleton keypoint sequence; determine the three-dimensional skeleton keypoint sequence of the target object based on the action transfer component sequence of the initial object.

In some embodiments, the video obtaining module 510 is further configured to obtain a second initial video involving the target object; the keypoint extracting module 520 is further configured to identify a two-dimensional skeleton keypoint sequence of the target object from several frames of image in the second initial video; when determining the three-dimensional skeleton keypoint sequence of the target object based on the action transfer component sequence of the initial object, the keypoint converting module 530 is configured to: determine an action transfer component sequence of the target object based on the two-dimensional skeleton keypoint sequence of the target object; determine a target action transfer component sequence based on the action transfer component sequence of the initial object and the action transfer component sequence of the target object; determine the three-dimensional skeleton keypoint sequence of the target object based on the target action transfer component sequence.

In some embodiments, the action transfer component sequence of the initial object includes a motion component sequence, an object structure component sequence, and a photographing angle component sequence; when determining the action transfer component sequence of the initial object based on the two-dimensional skeleton keypoint sequence, the keypoint converting module 530 is configured to: respectively determine motion component information, object structure component information, and photographing angle component information corresponding to each frame of image based on a two-dimensional skeleton keypoint corresponding to each of the several frames of image in the first initial video; determine the motion component sequence based on the motion component information corresponding to each of the several frames of image in the first initial video; determine the object structure component sequence based on the object structure component information corresponding to each of the several frames of image in the first initial video; determine the photographing angle component sequence based on the photographing angle component information corresponding to each of the several frames of image in the first initial video.

An embodiment of the present disclosure provides an electronic device. As shown in FIG. 6, the electronic device includes a processor 601, a memory 602, and a bus 603. The memory 602 stores machine readable instructions executable by the processor 601. When the electronic device runs, the processor 601 and the memory 602 communicate with each other via the bus 603.

The machine readable instructions are executed by the processor 601 to implement the steps of the action transfer method: obtaining a first initial video involving an action sequence of an initial object; identifying a two-dimensional skeleton keypoint sequence of the initial object from several frames of image in the first initial video; converting the two-dimensional skeleton keypoint sequence into a three-dimensional skeleton keypoint sequence of a target object; generating a target video involving an action sequence of the target object based on the three-dimensional skeleton keypoint sequence.

In addition to the above, the machine readable instructions are executed by the processor 601 to further implement method contents of any one embodiment described in the above method part and thus no redundant descriptions are made herein.

An embodiment of the present disclosure further provides a computer program product corresponding to the above method and apparatus. The computer program product includes computer readable storage medium storing program codes. Instructions included in the program codes may be used to implement the method in the above method embodiments. The specific implementation may be referred to the method embodiments and no redundant descriptions are made herein.

The differences between various embodiments are stressed in the above descriptions of various embodiments, with same or similar parts referred to each other. Therefore, for brevity, no redundant descriptions are made herein.

Those skilled in the art may clearly understand that for convenience and simplification of descriptions, the specific working processes of the above system and apparatus may be referred to the corresponding processes of the above method embodiments and will not be repeated herein. In the several embodiments of the present disclosure, it should be understood that the system, apparatus and method disclosed herein may be implemented in another way. The apparatus embodiments described above are merely illustrative, for example, the division of the modules is only a logic functional division and the modules may be divided another way in actual implementation. For another example, a plurality of modules or components may be combined or integrated into another system or some features therein may be neglected or not executed. Furthermore, those mutual couplings, or direct couplings or communication connections shown or discussed herein may be made through some communication interfaces, and indirect couplings or communication connections between apparatuses or modules are in electrical or mechanical form or the like.

The modules described as separate members may be or not be physically separated, and the members displayed as modules may be or not be physical units, e.g., may be located in one place, or may be distributed to a plurality of network units. Part or all of the modules may be selected according to actual requirements to implement the objectives of the solutions in the embodiments.

Furthermore, various functional units in various embodiments of the present disclosure may be integrated into one processing unit, or may be present physically separately, or two or more units thereof may be integrated into one unit.

The functions, if implemented in the form of software functional units and sold or used as independent products, may be stored in a processor-executable non-volatile computerreadable storage medium. Based on such understanding, the technical scheme of the present disclosure essentially or a part contributing to the prior art or part of the technical scheme may be embodied in the form of a software product, the software product is stored in a storage medium, and includes several instructions for enabling a computer device (such as a personal computer, a server or a network device) to execute all or part of the steps of the method disclosed by the embodiments of the present disclosure; and the above storage mediums include various mediums such as a USB disk, a mobile hard disk, a read-only memory (ROM), a random access memory (RAM), a diskette or a compact disk and the like which may store program codes.

The above descriptions are merely specific embodiments of the present disclosure to which the scope of protection of the present disclosure is not limited. Any changes or substitutions that easily occur to those skilled in the art in the technical scope of the present disclosure should fall in the scope of protection of the present disclosure. Therefore, the scope of protection of the present disclosure is indicated as in appended claims.

**Claims**

1.  A method of action transfer, comprising:

    obtaining a first initial video involving an action sequence of an initial object;
    identifying a two-dimensional skeleton keypoint sequence of the initial object from plural frames of image in the first initial video;
    converting the two-dimensional skeleton keypoint sequence into a three-dimensional skeleton keypoint sequence of a target object;
    generating a target video involving an action sequence of the target object based on the three-dimensional skeleton keypoint sequence.

2.  The method of claim 1, wherein converting the two-dimensional skeleton keypoint sequence into the three-dimensional skeleton keypoint sequence of the target object comprises:

    determining an action transfer component sequence of the initial object based on the two-dimensional skeleton keypoint sequence;
    determining the three-dimensional skeleton keypoint sequence of the target object based on the action transfer component sequence of the initial object.

3.  The method of claim 2, wherein,

    before determining the three-dimensional skeleton keypoint sequence of the target object, the method further comprises:

    obtaining a second initial video involving the target object;
    identifying a two-dimensional skeleton keypoint sequence of the target object from plural frames of image in the second initial video,

determining the three-dimensional skeleton keypoint sequence of the target object based on the action transfer component sequence of the initial object comprises:

determining an action transfer component sequence of the target object based on the two-dimensional skeleton keypoint sequence of the target object;
determining a target action transfer component sequence based on the action transfer component sequence of the initial object and the action transfer component sequence of the target object;
determining the three-dimensional skeleton keypoint sequence of the target object based on the target action transfer component sequence.

4. The method of claim 2, wherein the action transfer component sequence of the initial object comprises a motion component sequence, an object structure component sequence, and a photographing angle component sequence, wherein determining the action transfer component sequence of the initial object based on the two-dimensional skeleton keypoint sequence comprises:

for each of the plural frames of image in the first initial video, determining motion component information, object structure component information and photographing angle component information corresponding to the frame of image based on a two-dimensional skeleton keypoint corresponding to the frame of image;
determining the motion component sequence based on the motion component information corresponding to each of the plural frames of image in the first initial video;
determining the object structure component sequence based on the object structure component information corresponding to each of the plural frames of image in the first initial video;
determining the photographing angle component sequence based on the photographing angle component information corresponding to each of the plural frames of image in the first initial video.

5. The method of claim 1, wherein generating the target video involving the action sequence of the target object based on the three-dimensional skeleton keypoint sequence comprises:

generating a two-dimensional target skeleton keypoint sequence of the target object based on the three-dimensional skeleton keypoint sequence;
generating the target video involving the action sequence of the target object based on the two-dimensional target skeleton keypoint sequence.

6. The method of any one of claims 1-5, wherein converting the two-dimensional skeleton keypoint sequence into the three-dimensional skeleton keypoint sequence of the target object comprises:
converting the two-dimensional skeleton keypoint sequence into the three-dimensional skeleton keypoint sequence of the target object by using an action transfer neural network.

7. The method of claim 6, further comprising steps of training the action transfer neural network:

obtaining a sample motion video involving an action sequence of a sample object;
identifying a first sample two-dimensional skeleton keypoint sequence of the sample object from plural frames of sample image in the sample motion video;
obtaining a second sample two-dimensional skeleton keypoint sequence by performing limb scaling for the first sample two-dimensional skeleton keypoint sequence;
determining a loss function based on the first sample two-dimensional skeleton keypoint sequence and the second sample two-dimensional skeleton keypoint sequence;
adjusting a network parameter of the action transfer neural network based on the loss function.

8. The method of claim 7, wherein determining the loss function based on the first sample two-dimensional skeleton keypoint sequence and the second sample two-dimensional skeleton keypoint sequence comprises:

determining a first sample action transfer component sequence based on the first sample two-dimensional skeleton keypoint sequence;
determining a second sample action transfer component sequence based on the second sample two-dimensional skeleton keypoint sequence;
determining an estimated three-dimensional skeleton keypoint sequence based on the first sample action transfer component sequence;

determining the loss function based on the first sample action transfer component sequence, the second sample action transfer component sequence, and the estimated three-dimensional skeleton keypoint sequence.

9. The method of claim 8, wherein the loss function comprises a motion invariant loss function,

wherein the first sample action transfer component sequence comprises first sample motion component information, first sample structure component information and first sample angle component information corresponding to each frame of sample image,
wherein the second sample action transfer component sequence comprises second sample motion component information, second sample structure component information and second sample angle component information corresponding to each frame of sample image,
wherein determining the loss function comprises:

based on the second sample motion component information, the first sample structure component information, and the first sample angle component information corresponding to each frame of sample image, determining first estimated skeleton keypoints corresponding to respective first sample two-dimensional skeleton keypoints in the first sample two-dimensional skeleton keypoint sequence;
based on the first sample motion component information, the second sample structure component information, and the second sample angle component information corresponding to each frame of sample image, determining second estimated skeleton keypoints corresponding to respective second sample two-dimensional skeleton keypoints in the second sample two-dimensional skeleton keypoint sequence;
based on the first estimated skeleton keypoints, the second estimated skeleton keypoints, the first sample motion component information, the second sample motion component information, and the estimated three-dimensional skeleton keypoint sequence, determining the motion invariant loss function.

10. The method of claim 9, wherein the loss function further comprises a structure invariant loss function; determining the loss function further comprises:

screening out first sample two-dimensional skeleton keypoints in sample images corresponding to a first moment and a second moment from the first sample two-dimensional skeleton keypoint sequence;
screening out second sample two-dimensional skeleton keypoints in the sample images corresponding to the second moment and the first moment from the second sample two-dimensional skeleton keypoint sequence;
based on the first sample two-dimensional skeleton keypoints in the sample images corresponding to the first moment and the second moment, the second sample two-dimensional skeleton keypoint in the sample images corresponding to the second moment and the first moment, and the estimated three-dimensional skeleton keypoint sequence, determining the structure invariant loss function.

11. The method of claim 10, wherein the loss function further comprises a view-angle invariant loss function, wherein determining the loss function further comprises:
based on the first sample two-dimensional skeleton keypoints in the sample images corresponding to the first moment and the second moment, the first sample angle component information of the sample images corresponding to the first moment and the second moment, the second sample angle component information of the sample images corresponding to the first moment and the second moment and the estimated three-dimensional skeleton keypoint sequence, determining the view-angle invariant loss function.

12. The method of claim 11, wherein the loss function further comprises a reconstruction recovery loss function, wherein determining the loss function further comprises:
determining the reconstruction recovery loss function based on the first sample two-dimensional skeleton keypoint sequence and the estimated three-dimensional skeleton keypoint sequence.

13. An apparatus for action transfer, comprising:

a video obtaining module, configured to obtain a first initial video involving an action sequence of an initial object;
a keypoint extracting module, configured to identify a two-dimensional skeleton keypoint sequence of the initial object from plural frames of image in the first initial video;
a keypoint converting module, configured to convert the two-dimensional skeleton keypoint sequence into a three-dimensional skeleton keypoint sequence of a target object;
an image rendering module, configured to generate a target video involving an action sequence of the target object based on the three-dimensional skeleton keypoint sequence.

14. The apparatus of claim 13, wherein for converting the two-dimensional skeleton keypoint sequence into the three-dimensional skeleton keypoint sequence of the target object, the keypoint converting module is configured to:

determine an action transfer component sequence of the initial object based on the two-dimensional skeleton keypoint sequence;
determine the three-dimensional skeleton keypoint sequence of the target object based on the action transfer component sequence of the initial object.

15. The apparatus of claim 14, wherein the video obtaining module is further configured to obtain a second initial video involving the target object;

the keypoint extracting module is further configured to identify a two-dimensional skeleton keypoint sequence of the target object from plural frames of image in the second initial video,
for determining the three-dimensional skeleton keypoint sequence of the target object based on the action transfer component sequence of the initial object, the keypoint converting module is configured to:

determine an action transfer component sequence of the target object based on the two-dimensional skeleton keypoint sequence of the target object;
determine a target action transfer component sequence based on the action transfer component sequence of the initial object and the action transfer component sequence of the target object;
determine the three-dimensional skeleton keypoint sequence of the target object based on the target action transfer component sequence.

16. The apparatus of claim 14, wherein the action transfer component sequence of the initial object comprises a motion component sequence, an object structure component sequence, and a photographing angle component sequence, for determining the action transfer component sequence of the initial object based on the two-dimensional skeleton keypoint sequence, the keypoint converting module is configured to:

for each of the plural frames of image in the first initial video, determine motion component information, object structure component information, and photographing angle component information of the initial object based on a two-dimensional skeleton keypoint corresponding to the frame of image;
determine the motion component sequence based on the motion component information corresponding to each of the plural frames of image in the first initial video;
determine the object structure component sequence based on the object structure component information corresponding to each of the plural frames of image in the first initial video;
determine the photographing angle component sequence based on the photographing angle component information corresponding to each of the plural frames of image in the first initial video.

17. An electronic device, comprising a processor, a storage medium and a bus, wherein the storage medium stores machine readable instructions executable by the processor; when the electronic device runs, the processor and the storage medium communicate with each other via the bus; the processor executes the machine readable instructions to implement the action transfer method according to any one of claims 1-12.

18. A computer readable storage medium, storing computer programs, wherein the computer programs are executed by a processor to implement the action transfer method according to any one of claims 1-12.

S110

Obtain a first initial video involving an action sequence of an initial object

S120

Identify a two-dimensional skeleton keypoint sequence of the initial object from several frames of image in the first initial video

S130

Convert the two-dimensional skeleton keypoint sequence into a three-dimensional skeleton keypoint sequence of a target object

S140

Generate a target video involving an action sequence of the target object based on the three-dimensional skeleton keypoint sequence

FIG.1

First Initial Video

Two-dimensional Skeleton Keypoint of an Initial Object

Motion Component Information
Object Structure Component Information
Photographing Angle Component Information

Second Initial Video

Two-dimensional Skeleton Keypoint of a Target Object

Motion Component Information
Object Structure Component Information
Photographing Angle Component Information

Target Component Information
Target Structure Component Information
Target Angle Component Information

Fused Parameter

-45 degree

0 degree

45 degree

Three-dimensional Skeleton Keypoint

Target Video

Skeleton Extraction

Action Transfer Processing

Skeleton to Video Rendering

FIG.2

EP 3 979 204 A1

S310

Obtain a sample motion video involving an action sequence of a sample object

S320

Identify a first sample two-dimensional skeleton keypoint sequence of the sample object from several frames of sample image in the sample motion video

S330

Obtain a second sample two-dimensional skeleton keypoint sequence by performing limb scaling for the first sample two-dimensional skeleton keypoint sequence

S340

Determine a loss function based on the first sample two-dimensional skeleton keypoint sequence and the second sample two-dimensional skeleton keypoint sequence, and adjust a network parameter of the action transfer neural network based on the loss function

FIG.3

FIG.4

EP 3 979 204 A1

FIG.5

FIG.6

23

## EP 3 979 204 A1

| | INTERNATIONAL SEARCH REPORT | International application No. |
|---|---|---|
| | | **PCT/CN2021/082407** |

**A. CLASSIFICATION OF SUBJECT MATTER**

G06T 7/579(2017.01)i

According to International Patent Classification (IPC) or to both national classification and IPC

**B. FIELDS SEARCHED**

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

CNABS, CNTXT, VEN, USTXT, WOTXT, EPTXT, CNKI: 动作, 姿势, 姿态, 迁移, 重定向, 关键点, 关节, 骨骼, 三维, 二维, 帧, motion, pose, transfer, retarget, keypoint, joint, skeleton, three dimension, two dimension, frame

**C. DOCUMENTS CONSIDERED TO BE RELEVANT**

| Category* | Citation of document, with indication, where appropriate, of the relevant passages | Relevant to claim No. |
|---|---|---|
| PX | CN 111462209 A (BEIJING SENSETIME TECHNOLOGY DEVELOPMENT CO., LTD.) 28 July 2020 (2020-07-28)<br>entire document | 1-18 |
| PX | YANG, Zhuoqian et al. "TransMoMo: Invariance-Driven Unsupervised Video Motion Retargeting"<br>*2020 IEEE/CVF Conference on Computer Vision and Pattern Recognition,*<br>19 June 2020 (2020-06-19),<br>ISSN: 2575-7075,<br>sections 3-4 | 1-18 |
| PX | CN 111540055 A (GUANGZHOU HUYA TECHNOLOGY CO., LTD.) 14 August 2020 (2020-08-14)<br>description paragraphs 37-61 | 1, 13, 17-18 |
| X | ABERMAN, Kfir et al. "Learning Character-Agnostic Motion for Motion Retargeting in 2D"<br>*ACM Transactions on Graphics,* Vol. 38, No. 4, 12 July 2019 (2019-07-12),<br>section 1, 3-4, 6 | 1-8, 13-18 |
| X | CN 109821239 A (NETEASE (HANGZHOU) NETWORK CO., LTD.) 31 May 2019 (2019-05-31)<br>description, paragraphs [0038]-[0057] | 1, 13, 17-18 |

☑ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 June 2021** | **23 June 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**EP 3 979 204 A1**

**INTERNATIONAL SEARCH REPORT**

| International application No. |
| --- |
| **PCT/CN2021/082407** |

**C.  DOCUMENTS CONSIDERED TO BE RELEVANT**

| Category* | Citation of document, with indication, where appropriate, of the relevant passages | Relevant to claim No. |
| --- | --- | --- |
| A | CN 109978975 A (SHENZHEN SENSETIME TECHNOLOGY CO., LTD.) 05 July 2019 (2019-07-05)<br> description paragraphs 89-153 | 1-18 |
| A | CN 108510577 A (INSTITUTE OF SOFTWARE, CHINESE ACADEMY OF SCIENCES) 07 September 2018 (2018-09-07)<br> entire document | 1-18 |
| A | US 2019295305 A1 (ADOBE INC.) 26 September 2019 (2019-09-26)<br> entire document | 1-18 |

Form PCT/ISA/210 (second sheet) (January 2015)

**INTERNATIONAL SEARCH REPORT**
Information on patent family members

International application No.

**PCT/CN2021/082407**

| Patent document cited in search report | | | Publication date (day/month/year) | Patent family member(s) | | | Publication date (day/month/year) |
|---|---|---|---|---|---|---|---|
| CN | 111462209 | A | 28 July 2020 | None | | | |
| CN | 111540055 | A | 14 August 2020 | None | | | |
| CN | 109821239 | A | 31 May 2019 | None | | | |
| CN | 109978975 | A | 05 July 2019 | None | | | |
| CN | 108510577 | A | 07 September 2018 | CN | 108510577 | B | 23 March 2021 |
| US | 2019295305 | A1 | 26 September 2019 | US | 10546408 | B2 | 28 January 2020 |

Form PCT/ISA/210 (patent family annex) (January 2015)